# EUROPEAN PATENT SPECIFICATION

(11) **EP 2 995 398 B1**
(45) Date of publication and mention of the grant of the patent: **09.10.2019**
(21) Application number: 15181705.3
(22) Date of filing: 20.08.2015
(51) Int. Cl.: B22F 3/093, B22F 3/105, B22F 3/15, B22F 3/00, B22F 3/12

(54) **ARTICLE MANUFACTURING METHOD FROM POWDERS**
HERSTELLUNGSVERFAHREN AUS PULVERN
PROCÉDÉ DE FABRICATION À PARTIR DE POUDRES

(30) Priority: 15.09.2014 GB 201416223
(43) Date of publication of application: 16.03.2016
(73) Proprietor: Rolls-Royce plc, London SW1E 6AT (GB)
(72) Inventor: Williams, Paul, Derby, Derbyshire DE24 8BJ (GB)
(74) Representative: Rolls-Royce plc

(56) References cited:
- EP-A2- 2 669 030
- CN-A- 101 391 302
- JP-A- 2005 060 753
- US-A- 3 829 261
- US-A- 4 023 966
- US-A- 5 427 735
- US-A- 5 901 337

## Description

### Field of the Invention

The present invention relates to a method of manufacturing an article from powder material by hot isostatic pressing.

### Background of the Invention

Hot isostatic pressing is a processing technique in which high isostatic pressure is applied to a powder material contained in a sealed and evacuated canister at a high temperature. During the hot isostatic pressing cycle, the canister collapses as a result of the high gas pressures and high temperatures applied and results in consolidation of the powder material to form the article.

The powder material and canister for containing the powder material are typically formed of a metal, metal alloy, ceramic or ceramic-metallic. The canister may be formed by machining or by welding sheet metal. It may be built up by galvanic or sprayed metal deposition on a wax, polymeric or ceramic form which is subsequently removed. Metallic canisters may be electro-deposited onto a form which is subsequently removed.

Alternatively, as disclosed in Figures 8 and 9 of US5640667 and in EP2551040, the canister may be formed using additive layer manufacture in which the canister is built up by depositing and consolidating layer upon layer of a laser-fusible powder material. The powder material is consolidated by melting of the powder by a high energy (laser) beam and subsequent re-solidification. After consolidation, a further layer of the powder material is deposited on the consolidated powder material and the process of consolidation is repeated until the canister is complete. The canister is then filled with the powder material and subjected to hot isostatic pressing. In an alternative method, the powder material is deposited within the canister layer upon layer during the formation of the canister. The perimeter of the layer of powder material is consolidated using the laser beam with the remaining powder material (within the perimeter) being subsequently consolidated using hot isostatic pressing.

Prior to sealing the canister in preparation for hot isostatic pressing, it is known to apply a vacuum to the chamber to remove gas and/or moisture entrained within the powder material in order to minimise any voids in the finished article.

Additive layer manufacturing methods such as those described above, are typically carried out in an evacuated chamber such that the application of a vacuum prior to hot isostatic pressing becomes unnecessary. Alternatively, they may be carried out in a non-evacuated chamber with an additional evacuation step prior to hot isostatic pressing. Such a method is described in US4023966.

It is also known to apply vibratory energy to the canister to maximise the packing of the canister, again, in order to try to eliminate voids in the finished article. Such a method is described in EP2669030 and US5427735.

One problem with these known methods is that the application of a vacuum, with or without vibratory energy, whilst reducing voids within the finished article, can result in greater levels of distortion and lower confidence in the predictability of the geometry of the finished article. In particular, the upper extremities are at risk of significant deformation since settling of the powder and removal of entrained gas/moisture can result in an insufficient volume of powder material within the upper extremities of the canister. This requires significant post-processing machining to remove the distortion and can create significant material wastage detracting from the net shape manufacturing nature of this process.

Accordingly the present invention seeks to provide a method of manufacturing an article from powder material by hot isostatic pressing which reduces, preferably overcomes, the above mentioned problem.

### Summary of the Invention

In a first aspect, the present invention provides a method of manufacturing an article, the method comprising:
forming a sealed shell of gas impervious material, the shell comprising a collapsible hopper portion opening to a main body portion, the main body portion and at least part of the hopper portion containing a powder material;
applying vibratory energy to the shell and powder material to substantially empty the hopper portion of powder material and compact the powder material within the main body portion; and
subjecting the shell and compacted powder material to isostatic pressure to collapse the hopper portion and consolidate the compacted powder material within the main body portion to form the article.

During the application of vibratory energy to the shell, powder from the hopper portion (which acts as a reservoir) can move into the main body portion as voids within the powder material in the main body portion are filled. This ensures that the main body portion has a reduced/minimised volume fraction of void to powder material prior to isostatic pressing so that any distortion of the desired geometry of the article is more predictable, even at the upper extremities. This helps in designing the shape of the main body portion required to give a post-isostatic pressing geometry which is within acceptable tolerances.

In some embodiments, the hopper portion is integrally formed with the main body portion of the shell.

The main body portion is formed with an upper wall which is positioned uppermost during the manufacturing method (or at least during the application of vibratory energy). In some embodiments, the hopper portion is formed to extend from the upper wall of the main body portion. In this way, powder material can move from the hopper portion to the main body portion under gravity.

The main body portion is for defining the article and may have a shape substantially matching the desired geometry of the article (albeit with larger dimensions). It may have a shape which accommodates distortions resulting from isostatic pressing such that the resultant shape following isostatic pressing is as desired.

In some embodiments, the hopper portion is formed with a funnelled neck portion with the narrow end of the funnelled neck portion opening into the main body portion. The narrow end of the funnelled neck portion may be connected to (and optionally integral with) the upper wall of the main body portion.

In some embodiments, the hopper is adapted to readily collapse in a controlled manner prior to the main body during isostatic pressing. It may be adapted to fully collapse during isostatic pressing without compromising the gas impervious nature of the shell. In order to achieve this, the hopper portion may have at least one constricted portion. The/each constructed portion forms a folding point in the walls of the hopper portion to facilitate collapse of the hopper portion.

The method comprises applying vibratory energy to move powder material from the hopper portion to the main body portion (to fill the voids within the powder material in the main body portion).

The shell portion and powder material may be formed of metal or metal alloy e.g. from nickel, copper, iron, steel, nickel alloys, titanium, titanium alloys, magnesium, magnesium alloys, aluminium, aluminium alloys, vanadium, zirconium, hafnium, or refractory metals such as niobium, molybdenum, tantalum, tungsten and rhenium. The shell portion and powder material may be ceramic, metallic-ceramic combination or metal matrix composite e.g. from zirconium, yttria or silicon carbide. In some embodiments, the shell portion including the main body portion and the hopper portion is formed using additive layer manufacture.

In some embodiments, the vibratory energy is applied to the shell portion and powder material using a mechanical vibrator 13. Any appropriate mechanical vibrator may be used.

In some embodiments, the vibratory energy is applied to the shell portion and powder material using an ultrasound generator 15. Any appropriate ultrasound generator may be used.

In some embodiments, the vibratory energy is applied to the shell portion and powder material using an acoustic generator 14. Any appropriate acoustic generator may be used.

The frequency of the vibratory energy may be in the range 0.5-25kHz and can be varied to achieve the required densification/compaction.

The direction of the vibratory energy can be varied to achieve the required densification/compaction. For example, the direction of the vibratory energy may be parallel and/or perpendicular to a main axis of the main body.

In some embodiments, the method comprises subjecting the shell and compacted powder material to heat and isostatic pressure to consolidate the compacted powder material by hot isostatic pressing.

In some embodiments, the method further comprises machining the article to remove the shell portion and/or any powder material consolidated within the hopper portion.

The present invention can be used to manufacture nuclear valve bodies, actuator housings, gearbox housings, marine propulsion and deck equipment housings, load reacting mechanical fittings, low-medium temperature blades/vanes and small annular structures, for example.

### Brief Description of the Drawings

Embodiments of the invention will now be described by way of example with reference to the accompanying drawings in which:

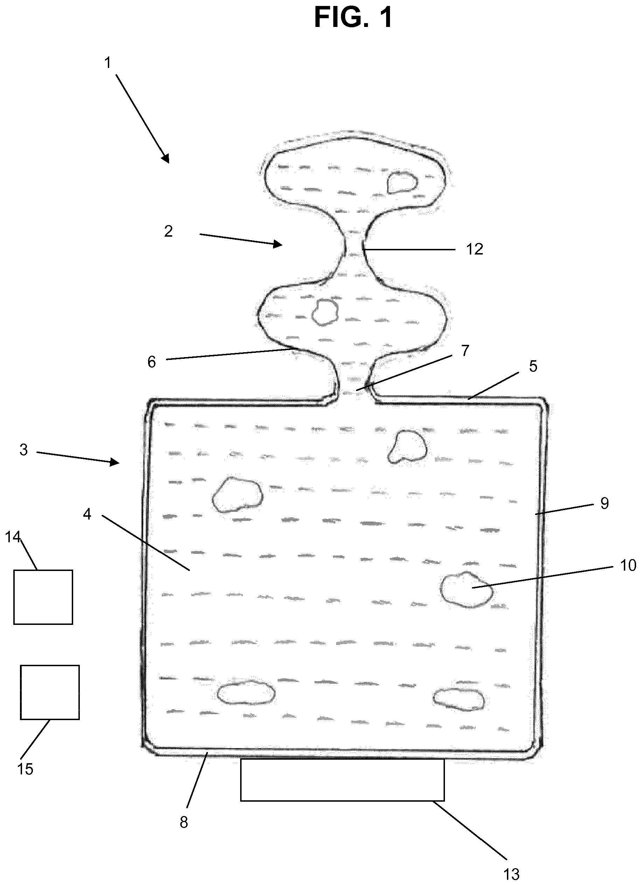

Figure 1 shows the formation of a sealed shell according to a first embodiment of the present invention;
Figure 2 shows the sealed shell of Figure 1 after application of vibratory energy; and
Figure 3 shows the sealed shell of Figure 2 after hot isostatic pressing.

### Detailed Description and Further Optional Features of the Invention

In a first embodiment of the present invention, a first step comprises forming a sealed shell 1 of gas impervious material.

The shell 1 comprises a hopper portion 2 which opens to a main body portion 3.

The main body portion 3 has a shape substantially matching the desired geometry of the finished article albeit of slightly larger dimensions. In this case, the desired geometry is a cylinder.

The hopper portion 2 has a funnelled neck portion 6 with the narrow end 7 of the funnelled neck portion 6 opening into the main body portion 3 at an upper wall 5 of the main body portion. It further includes a constricted portion 12.

The shell 1 including the main body portion 3 and the hopper portion 2 are formed using an additive layer manufacture method. A layer of powder material having a circular cross section is deposited and consolidated using a laser beam to form the lower wall 8 of the shell 1. A further layer of powder material is deposited on the lower wall 8 and only the perimeter of the layer is consolidated to form a cross-section of the side walls 9 of the shell 1. The central portion of the layer (within the perimeter) remains unconsolidated. A yet further layer is deposited and the perimeter consolidated to build up the shell 1. This is repeated until the entire shell 1 including the main body portion 3 and the integral hopper portion 2 is formed with the unconsolidated powder material 4 filling the main body portion 3 and partly filling the hopper portion 2.

The powder material 4 in the main body will contain voids 10 as a result of entrained gas/moisture.

Next, vibratory energy is applied to the shell 1 using a mechanical vibrator 13. During this vibration step, the upper wall 5 of the main body portion 3 is positioned uppermost. The frequency of the vibration may be in the range 0.5-25kHz. Any appropriate mechanical vibrator e.g. piezoelectric or through controlled oscillation of a weight.

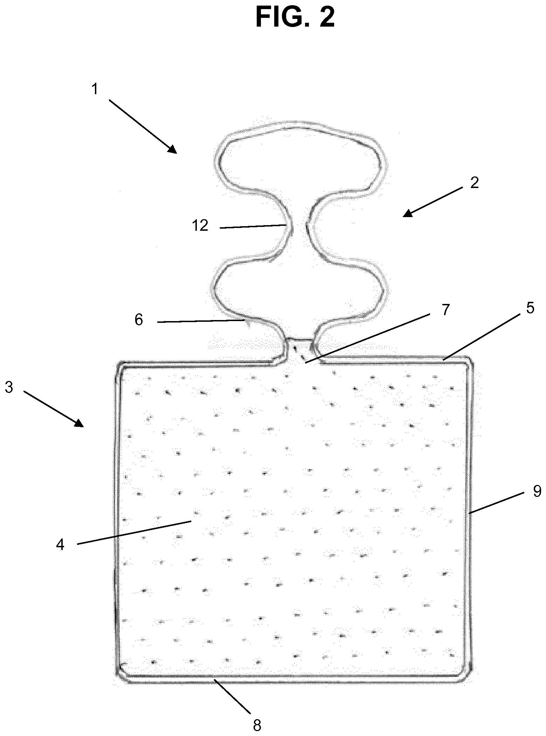

The vibrations help dislodge the entrained gas/moisture so that the powder material 4 in the main body portion settles to fill the voids 10 as shown in Figure 2. As the powder material 4 in the main settles, powder material in the hopper portion 2 moves, under gravity, through the funnelled neck portion 6 into the main body portion 3 to ensure that the main body portion 3 is completely filled with compacted powder material.

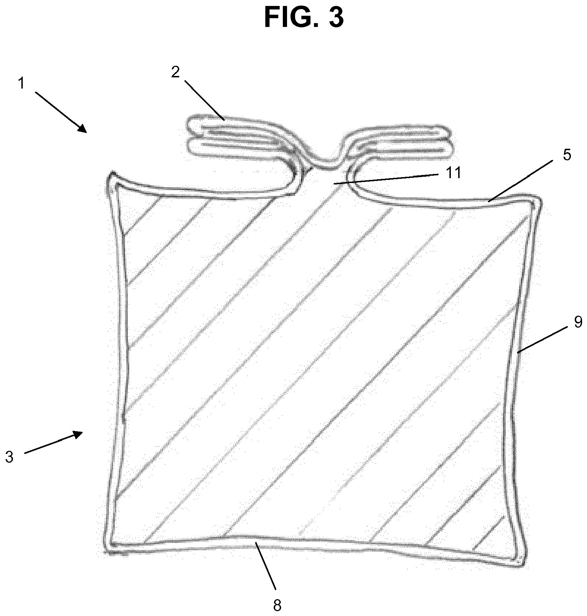

Next, as shown in Figure 3, the shell 1 is subjected to heat and isostatic pressure to consolidate the compacted powder material 4 within the main body portion 3 to form the article.

The empty hopper portion 2 is collapsed in a controlled manner by the pressure. The walls of the hopper portion 2 fold at the constricted portion 12 such that the hopper portion is completely collapsed after hot isostatic pressing and such that the collapsed hopper is able to be readily removed from the main body after hot isostatic pressing. The collapsed hopper portion is subsequently machined from the article along with the small tab 11 of consolidated powder material that was contained within the hopper portion 2.

Figure 3 shows some distortion of the main body 3 during hot isostatic pressing but this distortion is predictable owing to the reduced volume fraction of void to powder material prior to hot isostatic pressing.

## Claims

1. A method of manufacturing an article, the method comprising:
forming a sealed shell (1) of gas impervious material, the shell comprising a collapsible hopper portion (2) opening to a main body portion (3), the main body portion and at least part of the hopper portion containing a powder material (4);
applying vibratory energy to the shell and powder material to substantially empty the hopper portion of powder material and compact the powder material within the main body portion; and
subjecting the shell and compacted powder material to isostatic pressure to collapse the hopper portion and consolidate the compacted powder material within the main body portion to form the article.

2. A method according to claim 1 wherein the vibratory energy is applied to the shell (1)and powder material (4) using a mechanical vibrator (13).

3. A method according to any preceding claim wherein the vibratory energy is applied to the shell (1) and powder material (4) using an ultrasound generator(15).

4. A method according to any preceding claim wherein the vibratory energy is applied to the shell (1) and powder material (4) using an acoustic generator (14).

5. A method according to any one of the preceding claims comprising subjecting the shell (1) and compacted powder material to heat and isostatic pressure to consolidate the compacted powder material by hot isostatic pressing.

6. A method according to any one of the preceding claims further comprising machining the article to remove the shell (1) and/or any powder material consolidated within the hopper portion.

7. A method according to any preceding claim wherein the main body portion (3) is formed with an upper wall (3) which is positioned uppermost during the method, the hopper portion (2) extending from the upper wall of the main body portion.

8. A method according to any preceding claim wherein the hopper portion (2) is formed with a funnelled neck portion (6) with the narrow end (7) of the funnelled neck portion opening into the main body portion (3).

9. A method according to claim 8 wherein the hopper portion further comprises a constricted portion (12).

10. A method according to any preceding claim further comprising a step of forming the shell using additive layer manufacture.

## Patentansprüche

1. Verfahren zur Herstellung eines Gegenstands, wobei das Verfahren folgendes umfasst:
Bilden einer abgedichteten Umhüllung (1) aus gasundurchlässigem Material, wobei die Umhüllung einen faltbaren Trichterteil (2) umfasst, der sich zu einem Hauptkörperteil (3) öffnet, wobei der Hauptkörperteil und wenigstens ein Teil des Trichterteils ein Pulvermaterial (4) enthalten;
Anwenden von Schwingungsenergie auf die Umhüllung und das Pulvermaterial, um den Trichterteil im Wesentlichen von Pulvermaterial zu entleeren und um das Pulvermaterial in dem Hauptkörperteil zu verdichten; und
Aussetzen der Umhüllung und des verdichteten Pulvermaterials einem isostatischen Druck, um den Trichterteil zu falten und das verdichtete Pulvermaterial in dem Hauptkörperteil zu konsolidieren, um den Gegenstand zu bilden.

2. Verfahren nach Anspruch 1, wobei die Schwingungsenergie unter Verwendung eines mechanischen Vibrators (13) auf die Umhüllung (1) und das Pulvermaterial (4) angewendet wird.

3. Verfahren nach einem der vorstehenden Ansprüche, wobei die Schwingungsenergie unter Verwendung eines Ultraschallgenerators (15) auf die Umhüllung (1) und das Pulvermaterial (4) angewendet wird.

4. Verfahren nach einem der vorstehenden Ansprüche, wobei die Schwingungsenergie unter Verwendung eines Schallgenerators (14) auf die Umhüllung (1) und das Pulvermaterial (4) angewendet wird.

5. Verfahren nach einem der vorstehenden Ansprüche, das es umfasst, dass die Umhüllung (1) und das verdichtete Pulvermaterial Hitze und einem isostatischen Druck ausgesetzt wird, um das verdichtete Pulvermaterial durch heißes isostatisches Pressen zu konsolidieren.

6. Verfahren nach einem der vorstehenden Ansprüche, ferner umfassend das Bearbeiten des Gegenstands, um die Umhüllung (1) und/oder jegliches Pulvermaterial zu entfernen, das sich in dem Trichterteil angesammelt hat.

7. Verfahren nach einem der vorstehenden Ansprüche, wobei der Hauptkörperteil (3) mit einer oberen Wand (3) ausgebildet ist, die während dem Verfahren an oberster Stelle positioniert ist, wobei sich der Trichterteil (2) von der oberen Wand des Hauptkörperteils erstreckt.

8. Verfahren nach einem der vorstehenden Ansprüche, wobei der Trichterteil (2) mit einem trichterförmig erweiterten Halsteil (6) ausgebildet ist, wobei sich das schmale Ende (7) des trichterförmig erweiterten Halsteils in den Hauptkörperteil (3) öffnet.

9. Verfahren nach Anspruch 8, wobei der Trichterteil ferner einen verengten Teil (12) umfasst.

10. Verfahren nach einem der vorstehenden Ansprüche, ferner umfassend einen Schritt des Ausbildens der Umhüllung unter Verwendung von Schichtauftrag (Additive Layer Manufacturing).

## Revendications

1. Procédé de fabrication d'un article, le procédé comprenant les étapes consistant à :
former une enveloppe scellée (1) en matériau imperméable aux gaz, l'enveloppe comprenant une partie trémie (2) repliable s'ouvrant sur une partie corps principal (3), la partie corps principal et au moins une partie de la partie trémie contenant un matériau en poudre (4) ;
appliquer de l'énergie vibratoire à l'enveloppe et au matériau en poudre pour vider sensiblement la partie trémie du matériau en poudre et compacter le matériau en poudre dans la partie corps principal ; et
soumettre l'enveloppe et le matériau en poudre compacté à une pression isostatique pour replier la partie la trémie et consolider le matériau en poudre compacté à l'intérieur de la partie corps principal pour former l'article.

2. Procédé selon la revendication 1, l'énergie vibratoire étant appliquée à l'enveloppe (1) et au matériau en poudre (4) à l'aide d'un vibrateur mécanique (13).

3. Procédé selon l'une quelconque des revendications précédentes, l'énergie vibratoire étant appliquée à l'enveloppe (1) et au matériau en poudre (4) à l'aide d'un générateur d'ultrasons (15).

4. Procédé selon l'une quelconque des revendications précédentes, l'énergie vibratoire étant appliquée à l'enveloppe (1) et au matériau en poudre (4) à l'aide d'un générateur acoustique (14).

5. Procédé selon l'une quelconque des revendications précédentes, comprenant les étapes consistant à soumettre l'enveloppe (1) et le matériau en poudre compacté à la chaleur et à une pression isostatique pour consolider le matériau en poudre compacté par pression isostatique à chaud.

6. Procédé selon l'une quelconque des revendications précédentes comprenant en outre l'usinage de l'article pour enlever l'enveloppe (1) et/ou tout matériau en poudre consolidé dans la partie trémie.

7. Procédé selon l'une quelconque des revendications précédentes, la partie corps principal (3) étant formée avec une paroi supérieure (3) qui est positionnée le plus haut pendant le procédé, la partie trémie (2) s'étendant depuis la paroi supérieure de la partie corps principal.

8. Procédé selon l'une quelconque des revendications précédentes, la partie trémie (2) étant formée avec une partie col entonnoir (6), l'extrémité étroite (7) de la partie col entonnoir s'ouvrant dans la partie corps principal (3).

9. Procédé selon la revendication 8, la partie trémie comprenant en outre une partie rétrécie (12).

10. Procédé selon l'une quelconque des revendications précédentes comprenant en outre une étape consistant à former l'enveloppe à l'aide d'une fabrication de couche additive.
